# EUROPÄISCHE PATENTSCHRIFT

(11) **EP 3 369 128 B1**
(45) Veröffentlichungstag und Bekanntmachung des Hinweises auf die Patenterteilung: **20.11.2019**
(21) Anmeldenummer: 16775661.8
(22) Anmeldetag: 29.09.2016
(51) Int. Cl.: H01Q 1/22, H01Q 1/32, H01Q 21/28, H01Q 25/00

(54) **ACCESSOIRE SOWIE FUNKSIGNALÜBERTRAGUNGSSYSTEM**
ACCESSORY AND RADIO SIGNAL TRANSMISSION SYSTEM
ACCESSOIRE ET SYSTÈME DE TRANSMISSION DE SIGNAUX RADIOÉLECTRIQUES

(30) Priorität: 29.10.2015 DE 102015221121
(43) Veröffentlichungstag der Anmeldung: 05.09.2018
(73) Patentinhaber: Bayerische Motoren Werke Aktiengesellschaft, 80809 München (DE)
(72) Erfinder: EKIZ, Levent-Yusuf, 81373 München (DE); ZIMMERMANN, Sebastian, 80331 München (DE)
(86) Internationale Anmeldenummer: PCT/EP2016/073210
(87) Internationale Veröffentlichungsnummer: WO 2017/071906

(56) Entgegenhaltungen:
- DE-A1- 19 859 344
- GB-A- 2 519 452
- JP-A- 2006 217 265
- US-A1- 2004 061 660
- US-A1- 2009 243 791
- US-A1- 2010 305 779
- US-A1- 2012 062 358
- US-A1- 2013 141 212
- US-A1- 2015 048 926

## Beschreibung

Die vorliegende Erfindung betrifft ein Accessoire zum Anbringen an einem tragbaren Gegenstand. Ferner betrifft die Erfindung ein Funksignalübertragungssystem mit einem derartigen Accessoire und einem Kraftfahrzeug.

Accessoires erfreuen sich heutzutage großer Beliebtheit. Sei es als modisches Beiwerk oder als Zubehör zu einem Produkt. Insbesondere im Kraftfahrzeugbereich existiert eine Vielzahl an unterschiedlichen Accessoires, die einerseits die Bindung an die Kraftfahrzeugmarke erhöhen sollen und andererseits als sinnvolle Ergänzungen zu dem Kraftfahrzeug zu sehen sind. So gibt es als Accessoires für Kraftfahrzeuge beispielsweise Schlüsselanhänger, Regenschirme, Kaffeetassen, Uhren oder Schutzhüllen für Mobiltelefone. Derzeit herrschen verstärkt Bestrebungen, derartige Accessoires immer stärker in das System Kraftfahrzeug einzubinden und ihnen eine Bedienfunktion zukommen zu lassen.

Ferner wird bei Kraftfahrzeugen im Allgemeinen ein Schlüssel verwendet, um diese zu verriegeln, zu entriegeln und/oder zu starten. Dabei finden heutzutage vor allem Funkschlüssel Anwendung. Durch Betätigung einer Taste auf dem Schlüssel wird ein Funksignal an das Kraftfahrzeug gesendet, woraufhin das Kraftfahrzeug verriegelt oder entsperrt. Des Weiteren kann ein derartiger Schlüssel auch mit einer Nahfeldkommunikation ausgestattet sein. Dabei entriegelt das Kraftfahrzeug, wenn sich der Kraftfahrzeugfahrer dem Kraftfahrzeug nähert, ohne dass eine Taste betätigt werden muss. Zudem kann das Kraftfahrzeug gestartet werden, wenn sich der Schlüssel innerhalb des Kraftfahrzeugs befindet.

Für diese Funktionen muss der Kraftfahrzeugfahrer stets den Schlüssel bei sich tragen.

Aus dem Dokument US 2013/0141212 A1 ist eine Hülle für ein Mobiltelefon bekannt, wobei die Hülle Kommunikationsmittel zum drahtlosen Kommunizieren mit einem Sicherheits- und/oder Zugangssystem eines Fahrzeugs aufweist. Die Kommunikationsmittel können innerhalb des Materials, aus welchem die Hülle gebildet ist, oder in einem Schlitz oder einer Öffnung der Hülle angeordnet sein. Die Kommunikationsmittel weisen Mittel auf, um Steuerungs- oder Betriebsbefehle an das Fahrzeug zu übertragen, um eine oder mehrere Funktionen oder Einrichtungen zu betreiben oder zu steuern.

Das Dokument US 2009/0243791 A1 offenbart eine Fernbedienungsvorrichtung für ein Fahrzeug-Fernzugangssystem mit einem Gehäuse, einem Eingabeschalter zum Auswählen einer Fahrzeugsteuerungsfunktion, einer Steuerung, einem Sender zum Senden eines drahtlosen Signals von der Steuerung zu dem Fahrzeug-Fernzugangssystem und einer Befestigung zum Anbringen des Gehäuses an einem separaten Gegenstand, welchen ein Benutzer trägt.

Aus dem Dokument GB 2519452 A ist eine Hülle für eine elektronische Vorrichtung bekannt, welche wenigstens eine Aussparung an einer inneren Oberfläche der Abdeckung aufweist, in welcher die Bestandteile eines Fahrzeugschlüssels angeordnet sind. Die Hülle weist des Weiteren wenigstens eine Steuerungseinrichtung wie etwa einen Button an einer äußeren Oberfläche der Hülle auf, welche mit wenigstens einem Schaltkreiselement des Fahrzeugschlüssels zum drahtlosen Sperren und/oder Entsperren eines Fahrzeugs verbunden ist.

Das Dokument US 2004/0061660 A1 betrifft einen drei-Achsen-Antennen-Chip mit einem kreuzförmigen Kern, welcher aus einer magnetischen Substanz hergestellt ist. Der Kern weist einen X-Achsen-Kernteil und einen Y-Achsen-Kernteil auf. Die Kernteile sind übereinander angeordnet, so dass diese senkrecht zueinander angeordnet sind. Ein X-Achsen Spulenteil wird über dem X-Achsen-Kernteil und ein Y-Achsen-Spulenteil über den Y-Achsen-Kernteil bereitgestellt. Ein Z-Achsen-Spulenteil wird über eine Z-Achse bereitgestellt, welche senkrecht zum X-Achsen-Kernteil und dem Y-Achsen-Kernteil angeordnet ist.

Das Dokument US 2012/0062358 A1 offenbart beispielsweise ein System, in welchem eine dreidimensionale niederfrequente Antenne und eine Hochfrequenzantenne verwendet werden. Die dreidimensionale niederfrequente Antenne weist drei Spulen auf, wobei jede relativ zu der X-, Y- und Z-Achse orientiert ist, welche ein kartesisches Koordinatensystem für einen dreidimensionalen Raum definieren. Die Hochfrequenzantenne ist entlang einer der Achsen der niederfrequenten Antennenspulen und in dem gleichen Antennenpack wie die dreidimensionale niederfrequente Antenne orientiert. Die dreidimensionale niederfrequente Antenne ist eingerichtet, um in Verbindung mit einem niederfrequenten Signal zwischen 3 kHz und 300 kHz verwendet zu werden. Die Hochfrequenzantenne wird in Verbindung mit einem Hochfrequenzsignal zwischen 3 MHz und 30 MHz verwendet.

Aus dem Dokument US 2015/0048926 A1 ist ferner eine Hilfsvorrichtung bekannt, welche dazu eingerichtet ist, eine Handlung mit einer weiteren Vorrichtung durchzuführen. Die Hilfsvorrichtung weist dabei einen Datenspeicher, einen Prozessor, einen Kommunikationsschaltkreis zum Kommunizieren mit einer weiteren Vorrichtung und ein Display auf. Die Hilfsvorrichtung ist dazu eingerichtet, um sich zu melden, wenn sich die weitere Vorrichtung innerhalb eines vorbestimmten Abstands zur Hilfsvorrichtung befindet, und eine Transaktion zwischen den Vorrichtungen zu initiieren.

Des Weiteren ist aus dem Dokument US 2010/0305779 A1 ein Fahrzeugfernsteuerungssystem mit einer Basisübertragungsstation bekannt, welche in einem Fahrzeug und einem Schlüsselanhänger angeordnet ist. Die Basisübertragungsstation verwendet eine omnidirektionale Antenne zum drahtlosen Kommunizieren mit einem Schlüsselband über das IEEE 802.15.4 Kommunikationsprotokoll. Weitere Antennen sind in dem Fahrzeug angeordnet und ebenfalls dazu eingerichtet, um über die IEEE 802.15.4. Bandbreite zu kommunizieren.

DE 19859344 A1 und JP2006-217265 offenbaren dann weitere Geräte, die zur Aktivierung und/oder Deaktivierung einer Sicherheitseinrichtung eines Kraftfahrzeugs verwendet werden. Es ist eine Aufgabe der vorliegenden Erfindung, ein Accessoire sowie ein Funksignalübertragungssystem zu schaffen, das den Komfort eines Kraftfahrzeugfahrers erhöht.

Zur Lösung dieser Aufgabe wird ein Accessoire mit den Merkmalen des Anspruchs 1 sowie ein Funksignalübertragungssystem mit den Merkmalen des Anspruchs 13 vorgeschlagen.

Vorteilhafte Ausgestaltungen des Accessoires und des Funksignalübertragungssystems sind in den jeweiligen abhängigen Ansprüchen offenbart.

In einem ersten Aspekt der Erfindung weist ein Accessoire zum Anbringen an einem tragbaren Gegenstand eine Funksignalübertragungsvorrichtung zum Übertragen wenigstens eines Funksignals zum Bedienen eines Kraftfahrzeugs, insbesondere zum Öffnen, zum Schließen und/oder zum Starten, wenigstens einen Grundkörper und eine Speichereinrichtung zum Speichern des zu übertragenden Funksignals und eine Antennenanordnung zum Übertragen und/oder Empfangen von Funksignalen auf, wobei die Speichereinrichtung und die Antennenanordnung in dem Grundkörper integriert sind, und wobei die Antennenanordnung derart ausgebildet ist, dass sie in alle Raumrichtungen ein Funksignal senden und/oder empfangen kann. Durch die Integration der Funksignalübertragungsvorrichtung in ein Accessoire, welches der Kraftfahrzeugfahrer stets bei sich trägt, ist dessen Komfort erhöht, da der Kraftfahrzeugfahrer kein zusätzliches Gerät, wie beispielsweise einen Schlüssel, mehr mit sich zu tragen hat. Ferner ist es durch die Miniaturisierung der an sich bekannten Technik nicht mehr erforderlich, Änderungen an dem Kraftfahrzeug vorzunehmen. Somit können bereits in Serie oder in der Entwicklung befindliche Kraftfahrzeuge einfach auf das Accessoire umgerüstet werden. Ferner kann eine Personifizierung des Accessoires vorgenommen werden. Hierzu kann beispielsweise ein eigens auf den Kraftfahrzeugfahrer abgestimmtes Branding auf das Accessoire aufgebracht werden. Ferner ist es möglich, den Kraftfahrzeugfahrer noch enger an die Kraftfahrzeugmarke zu binden, da zum Erwerb dieses Accessoires eigens ein Händler aufgesucht werden muss.

Ein Accessoire im Sinne der Erfindung ist eine Einrichtung, welche bei bestimmungsgemäßer Benutzung in körperlicher Verbindung mit einem anderen Gegenstand steht. Vorzugsweise ist der Gegenstand dabei ein Alltagsgegenstand, welcher der Fahrer eines Fahrzeugs im Normalfall stets mit sich führt.

In einer vorteilhaften Ausgestaltung der Erfindung ist das Accessoire als Hülle oder Gehäuse, insbesondere eines Mobiltelefons oder einer Uhr, ausgebildet. Durch die Miniaturisierung der Funksignalübertragungsvorrichtung und deren Einbau in eine Hülle oder ein Gehäuse, insbesondere einer Schutzhülle eines Mobiltelefons, oder einer Uhr, ist es nicht mehr notwendig, ein zusätzliches Gerät in Form eines Schlüssels mit sich zu tragen. Zudem ist keine Abstimmung und Kollaboration mit dem Mobiltelefonhersteller erforderlich, insbesondere hinsichtlich der Nutzung von bereits im Endgerät verbauten Funksystemen, wie beispielsweise Bluetooth. Zudem kann die Stromversorgung der Funksignalübertragungsvorrichtung durch das Mobiltelefon oder die Uhr sichergestellt werden. Hierzu kann die Stromversorgung der Hülle oder des Gehäuses über einen USB- oder einen anderen Anschluss des Mobiltelefons, wie beispielsweise ein sogenannter Lightning-Anschluss, oder der Uhr genutzt werden. Ferner kann eine Stromversorgungsquelle in die Hülle oder das Gehäuse integriert werden.

In einer weiteren vorteilhaften Ausgestaltung ist die Antennenanordnung in eine der Umfangsseiten der Hülle integriert. Durch die Integration der Antennenanordnung in eine der Umfangsseiten wird eine ausreichende Signalübertragung gewährleistet.

Gemäß einer weiteren vorteilhaften Ausgestaltung deckt die Antennenanordnung wenigstens im Wesentlichen alle drei Raumrichtungen ab. Dadurch ist sichergestellt, dass unabhängig von der Position des Accessoires zuverlässig ein Signal an das Kraftfahrzeug gesendet oder empfangen wird.

Gemäß einer weiteren vorteilhaften Ausgestaltung weist die Antennenanordnung eine erste Antenne, insbesondere für Frequenzen im Kilohertzbereich, mit wenigstens drei Antennenelementen auf, wobei jedes der Antennenelemente für eine der Raumrichtungen vorgesehen ist. Unter Raumrichtungen werden die Koordinaten eines Koordinatensystems verstanden, also x-Achse, y-Achse und z-Achse. Somit sendet oder empfängt ein erstes Antennenelement in die x-Richtung, ein zweites Antennenelement in die y-Richtung und ein drittes Antennenelement in die z-Richtung. Dadurch kann unabhängig von der Position des Accessoires zuverlässig ein Signal an das Kraftfahrzeug gesendet oder empfangen werden.

In einer weiteren vorteilhaften Ausgestaltung weist die Antennenanordnung eine zweite Antenne, insbesondere für Frequenzen oberhalb des Kilohertzbereichs, auf. Durch das Vorsehen einer zweiten Antenne kann das Accessoire in zwei verschiedenen Frequenzbereichen senden, wobei die Frequenz der zweiten Antenne vorzugsweise außerhalb des Kilohertzbereichs liegt. Beispielswese kann hiermit ermöglicht werden, dass das Accessoire zusätzlich im WLAN-Frequenzbereich sendet und/oder empfängt. Die zweite Antenne kann dabei vorzugsweise als Monopolantenne, Dipolantenne oder auch PIF-Antenne ausgebildet sein.

Gemäß einer weiteren vorteilhaften Ausgestaltung sind die erste und die zweite Antenne in der Weise, insbesondere durch Vorsehen eines Abstands oder durch Ausrichtung der Polarisierung, angeordnet, dass keine Interferenz zwischen den Antennen entsteht. Bevorzugt werden die beiden Antennen derart weit voneinander entfernt in dem Accessoire integriert, so dass keine Interferenz zwischen den beiden Antennen entsteht und somit eine einwandfreie Funktion gewährleistet ist.

Gemäß einer weiteren vorteilhaften Ausgestaltung ist eines der Antennenelemente umlaufend in eine Hülle oder ein Gehäuse integriert, wobei die anderen Antennenelemente in eine der Umfangsseiten der Hülle oder des Gehäuses integriert sind, oder wobei in zwei zueinander senkrecht stehenden Umfangsseiten der Hülle oder des Gehäuses jeweils eine der beiden anderen Antennenelemente integriert ist.

Gemäß einer weiteren vorteilhaften Ausgestaltung sind alle Antennenelemente in eine einzige Umfangsseite einer Hülle oder eines Gehäuses integriert. Dadurch ist die Funksignalübertragungsvorrichtung sehr stark miniaturisiert. Gemäß einer weiteren vorteilhaften Ausgestaltung sind die Antennenelemente wenigstens im Wesentlichen orthogonal zueinander ausgerichtet. Dadurch wird sichergestellt, dass jedes der Antennenelemente nur in eine Raumrichtung Funksignale sendet und/oder empfängt.

Gemäß einer weiteren vorteilhaften Ausgestaltung weisen die Antennenelemente eine Spulenform auf. Spulenförmige Antennenelemente sind als kostengünstige Zukaufteile erhältlich, wodurch das Accessoire kostengünstig in der Herstellung ist.

Gemäß einer weiteren vorteilhaften Ausgestaltung umfasst jedes der Antennenelemente einen Ferrit-Kern. Dadurch kann das magnetische Feld geführt werden.

Gemäß einer weiteren vorteilhaften Ausgestaltung liegt die Funksignalübertragungsfrequenz jedes Antennenelementes im Niederfrequenzbereich oder Langwellenbereich, insbesondere bei 125 kHz.

Gemäß einer weiteren vorteilhaften Ausgestaltung ist die zweite Antenne in eine Längsseite der Hülle oder des Gehäuses integriert. Die zweite Antenne kann als Monopolantenne ausgebildet sein und kann sich über die gesamte Längsseite der Hülle oder des Gehäuses erstrecken.

Gemäß einer weiteren vorteilhaften Ausgestaltung ist die Antennenanordnung mittels Laser-Direkt-Strukturierung in dem Grundkörper eingebracht. Das Verfahren der Laser-Direkt-Strukturierung stellt ein kostengünstiges Herstellungsverfahren für die Antennenanordnung dar. Beim Laser-Direkt-Strukturieren kann ein thermoplastischer Kunststoff verwendet werden, der mit einer laseraktivierbaren Metallverbindung als Kunststoffadditiv dotiert ist. Dieses Basisteil kann im Einkomponenten-Spritzguss hergestellt werden. Anschließend kann ein Laserstrahl die späteren Antennenbahnen auf den Kunststoff schreiben. Die Laser-Direkt-Strukturierung ermöglicht eine hohe Flexibilität sowie ein hohes Potential zur Miniaturisierung, da feinste Leiterbahnen möglich sind.

Gemäß einer weiteren vorteilhaften Ausgestaltung sind in den Grundkörper ferner ein Schaltkreis, eine Energiespeichereinrichtung und eine Schnittstelle zum Anschließen der Energiespeichereinrichtung an eine Stromquelle integriert. Der Schaltkreis kann als analoger Schaltkreis oder als digitaler Schaltkreis ausgebildet sein. Ein digitaler Schaltkreis kann ferner ein Mikrocontroller sein. Die Energiespeichereinrichtung dient als Stromquelle für die Funksignalübertragungsvorrichtung und kann als aufladbarer Akku ausgebildet sein. Das Aufladen der Energiespeichereinrichtung erfolgt bevorzugt über die Schnittstelle. Bevorzugt ist die Schnittstelle als ein USB- oder Lightning-Anschluss ausgebildet.

Gemäß einer weiteren vorteilhaften Ausgestaltung weist der Grundkörper einen Schalter zur Aktivierung der Übertragung und/oder des Empfangens des Funksignals auf. Der Schalter kann als Drucktaste oder als eine Schiebetaste ausgebildet sein, die in dem Grundkörper integriert und mit der Funksignalübertragungsvorrichtung verbunden ist.

Gemäß einer weiteren vorteilhaften Ausgestaltung ist die zweite Antenne ausgebildet um Funksignale, insbesondere auf einer Frequenz von 433 MHz (ISM-Band) und/oder 2,4 GHz, zu empfangen und/oder zu senden. Hierdurch ist vorzugsweise als zusätzliche Funktion eine Übertragung von RFID-Signalen, NFC-Signalen, WLAN-Signalen, Bluetooth-Signalen und/oder anderen Signalarten möglich. Bevorzugt ist die Frequenz der ersten Antenne niedriger als diejenige der zweiten Antenne. Dadurch werden zwei Antennensysteme mit unterschiedlichen Frequenzen geschaffen. Die Größe der zweiten Antenne kann in der Weise reduziert werden, dass deren Platzbedarf auf einer Trägerstruktur, insbesondere einer Leiterplatte untergebracht werden kann.

Gemäß einer weiteren vorteilhaften Ausgestaltung ist ein Funksignalübertragungssystem mit einem Accessoire und einem Kraftfahrzeug vorgesehen. Bevorzugt weist das Kraftfahrzeug wenigstens eine Sende- und Empfangseinheit auf, die mit der Funksignalübertragungsvorrichtung kommunizieren kann.

In einer vorteilhaften Ausgestaltung kann eine Position des Accessoires durch das Kraftfahrzeug geortet werden, insbesondere, ob das Accessoire innerhalb oder außerhalb des Kraftfahrzeugs angeordnet ist. Dadurch kann festgestellt werden, ob sich der Kraftfahrzeugfahrer innerhalb oder außerhalb des Kraftfahrzeugs befindet, so dass der Motor nur dann gestartet wird, wenn sich der Kraftfahrzeugfahrer auf dem Fahrzeugsitz befindet. Zudem kann die Heizung und/oder die Klimaanlage eingeschaltet oder eingestellt werden, wenn das System erkennt, dass der Kraftfahrzeugfahrer auf dem Fahrzeugsitz sitzt. Ferner weist das Funksignalübertragungssystem eine Sicherheitsfunktion auf, da die Wegfahrsperre erst dann deaktiviert wird, wenn das System erkennt, dass der Fahrzeugfahrer auf dem Fahrzeugsitz Platz genommen hat. Dadurch wird vermieden, dass Unbefugte, wie beispielsweise Kinder, die auf dem Fahrzeugsitz Platz genommen haben, die Wegfahrsperre deaktivieren und das Kraftfahrzeug starten können.

Nachfolgend werden das Accessoire, das Funksignalübertragungssystem sowie weitere Merkmale und Vorteile anhand von Ausführungsbeispielen näher erläutert, die in den Zeichnungen wenigstens teilweise schematisch dargestellt sind. Hierbei zeigen:
- Fig. 1: ein Funksignalübertragungssystem mit einem Accessoire und einem Kraftfahrzeug;
- Fig. 2: ein Accessoire gemäß einer ersten Ausführungsform;
- Fig. 3: ein Accessoire gemäß einer zweiten Ausführungsform; und
- Fig. 4: ein Accessoire gemäß einer dritten Ausführungsform.

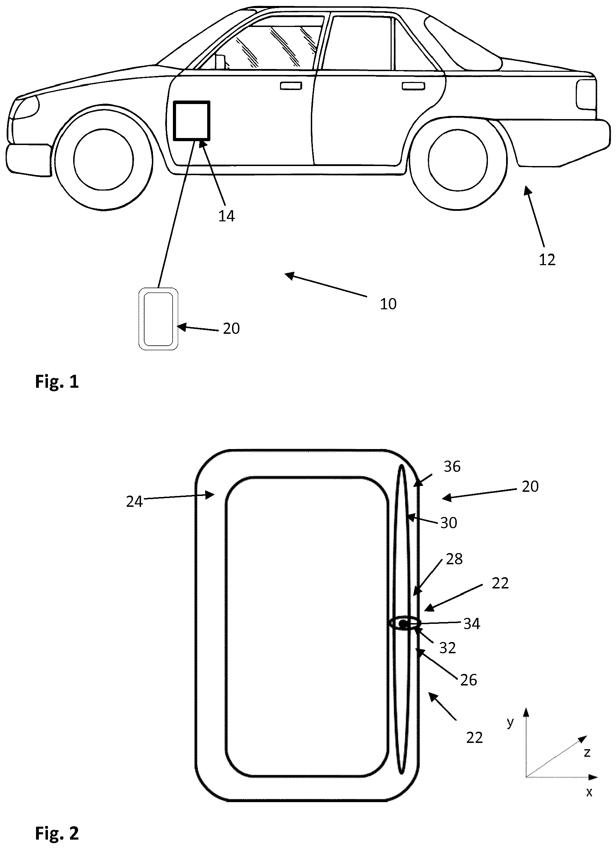

In Fig. 1 ist ein Funksignalübertragungssystem 10 gezeigt, das ein Kraftfahrzeug 12 mit einer darin integrierten Sende- und Empfängervorrichtung 14 und ein Accessoire 20 umfasst. Das Accessoire 20 ist vorliegend als Schutzhülle für ein Mobiltelefon ausgebildet und kann mit der Sende- und Empfängereinheit 14 durch Senden und/oder Empfangen von Funksignalen kommunizieren. Zum Senden und/oder Empfangen eines Funksignals kann das Accessoire 20 mit einem nicht dargestellten Schalter versehen sein, der bei Betätigung ein Funksignal senden und/oder empfangen kann. Ferner kann das Accessoire 20 auch derart ausgebildet sein, dass es stets ein Funksignal senden oder empfangen kann.

Die Sende- und Empfängereinrichtung 14 ist vorzugsweise an einer oder beiden Seiten des Kraftfahrzeugs 12 angeordnet. Weiter vorzugsweise sind alternativ oder zusätzlich Sende- und Empfangseinrichtungen 14 an der Vorderseite, dem Dach und/oder dem Heck des Kraftfahrzeugs angeordnet.

Mittels des Accessoires 20 beziehungsweise des von dem Accessoire 20 gesendeten und/oder empfangenen Funksignals kann das Kraftfahrzeug 12 entriegelt oder verriegelt werden. Ferner kann der Kraftfahrzeugmotor gestartet werden, wenn sich das Accessoire 20 innerhalb des Kraftfahrzeugs 12 befindet.

In Fig. 2 ist eine erste Ausführungsform des Accessoires gezeigt. Das Accessoire 20 weist eine Funksignalübertragungsvorrichtung 22 auf, die zum Entriegeln, Verriegeln des Kraftfahrzeugs 12 oder Starten des Kraftfahrzeugmotors ein Funksignal senden und/oder empfangen kann. Die Funksignalübertragungsvorrichtung 22 weist einen Grundkörper 24, eine nicht dargestellte Speichereinrichtung zum Speichern des zu übertragenden Funksignals und eine Antennenanordnung 26 zum Übertragen und/oder Empfangen von Funksignalen auf. Der Grundkörper 24 ist vorliegend als Schutzhülle für ein Mobiltelefon ausgebildet. Die Antennenanordnung 26 weist eine erste Antenne 28, insbesondere für Frequenzen im Kilohertzbereich, auf. Die erste Antenne 28 umfasst ein erstes Antennenelement 30, ein zweites Antennenelement 32 und ein drittes Antennenelement 34, wobei jedes der Antennenelemente 30, 32, 34 in eine der Raumrichtungen ausgerichtet ist, so dass jedes der Antennenelemente 30, 32, 34 in eine der Raumrichtungen Funksignale Senden und/oder empfangen kann. In der in Fig. 1 gezeigten ersten Ausführungsform ist die erste Antennenanordnung 26 in einer ersten Umfangsseite 36 des Grundkörpers 24 derart angeordnet, dass sich das erste Antennenelement 30 in x-Richtung, das zweite Antennenelement 32 in y-Richtung und das dritte Antennenelement 34 in z-Richtung erstreckt. Dadurch ist sichergestellt, dass die Antennenanordnung 26 ein Funksignal in alle drei Raumrichtungen abstrahlt beziehungsweise empfangen kann. Vorzugsweise sind die Antennenelemente 30, 32, 34 orthogonal zueinander ausgerichtet. Die Antennenelemente 30, 32, 34 können eine Spulenform aufweisen und einen Ferritkern umfassen. Vorzugsweise liegt die Funksignalübertragungsfrequenz jedes Antennenelements 30, 32, 34 im Niederfrequenzbereich oder Langwellenbereich, insbesondere bei 125 kHz.

Die Funksignalübertragungsvorrichtung 22 kann ferner einen Schaltkreis, eine Energiespeichereinrichtung sowie eine Schnittstelle zum Anschließen der Energiespeichereinrichtung an eine Stromquelle aufweisen. Die Schnittstelle kann als USB- oder Lightning-Anschluss ausgebildet sein.

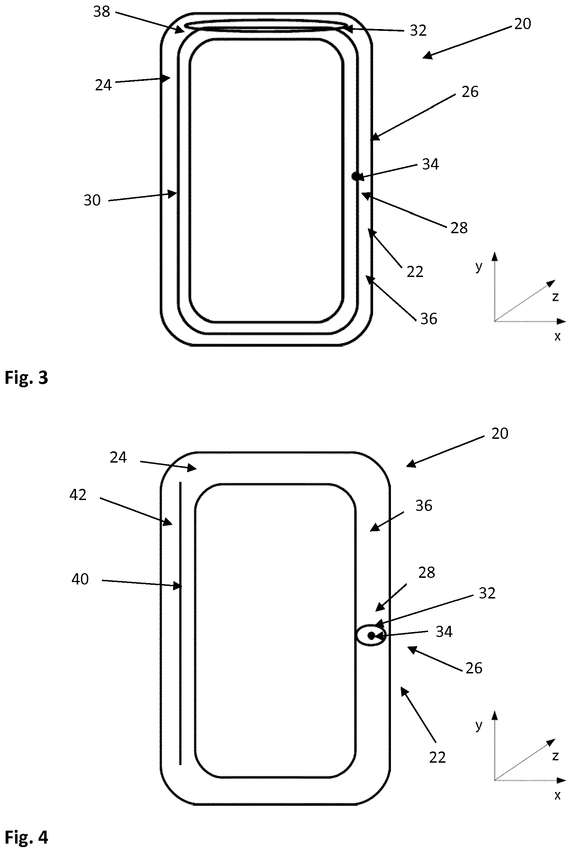

In Fig. 3 ist eine zweite Ausführungsform des Accessoires 20 gezeigt, die sich von der ersten Ausführungsform in der Anordnung der Antennenelemente 30, 32, 34 unterscheidet. Das erste Antennenelement 30 ist dabei umlaufend in den Grundkörper 24 integriert. Das zweite Antennenelement 32 ist in die erste Umfangsseite 36 und das dritte Antennenelement 34 ist in eine zweite Umfangsseite 38 des Grundkörpers 24 integriert. Die Antennenelemente 30, 32, 34 sind dabei derart in den Grundkörper 24 integriert, dass sie in alle drei Raumrichtungen Funksignale senden und/oder empfangen können.

In Fig. 4 ist eine dritte Ausführungsform des Accessoires 20 gezeigt, das sich von den anderen beiden Ausführungsformen dadurch unterscheidet, dass die Antennenanordnung 26 eine zweite Antenne 40 aufweist, die in eine dritte Umfangsseite 42 des Grundkörpers 24 eingebracht ist und vorzugsweise als Monopolantenne ausgebildet ist, die insbesondere für Frequenzen oberhalb des Kilohertzbereichs ausgelegt ist. Vorzugsweise ist die dritte Umfangsseite 42 in eine Längsseite des Grundkörpers 24 integriert. Bevorzugt ist die zweite Antenne ausgebildet, um ein RFID-Signal, ein NFC-Signal, ein WLAN-Signal, ein Bluetooth-Signal, insbesondere auf 433 MHz oder 2,4 GHz, zu empfangen und/oder zu senden. Wie in Fig. 4 ersichtlich ist, kann sich die zweite Antenne 40 über die gesamte dritte Umfangsseite 42 des Grundkörpers 24 erstrecken. Vorzugsweise ist diese jedoch so klein, dass diese auf einer Leiterplatte der Funkübertragungsvorrichtung 22 untergebracht werden kann. Die erste Antenne 28 ist in der ersten Umfangsseite 26 des Grundkörpers 24 integriert und dadurch derart weit von der zweiten Antenne 40 beabstandet, dass keine oder nur geringe Interferenzen zwischen den Antennen 28, 40 entstehen. Da eine zweite Antenne 40 vorgesehen ist, benötigt die erste Antenne 28 nur noch zwei Antennenelemente 32, 34, die orthogonal zueinander und zu der ersten Antenne 40 ausgerichtet sind.

Die Anordnung der Antennen 28, 40 beziehungsweise der Antennenelemente 30, 32, 34 ist nicht auf die zuvor beschriebene Anordnung in den Umfangsseiten des Grundkörpers 24 beschränkt. Vielmehr können die Antennen 28, 40 beziehungsweise die Antennenelemente 30, 32, 34 in jeder der Umfangsseiten integriert sein, jedoch müssen die Antennen 28, 40 beziehungsweise die Antennenelemente 30, 32, 34 derart in den Umfangsseiten integriert sind, dass sie orthogonal zueinander ausgerichtet sind.

### Bezugszeichenliste

- 10: Funksignalübertragungssystem
- 12: Kraftfahrzeug
- 14: Sende- und Empfängervorrichtung
- 20: Accessoire
- 22: Funksignalübertragungsvorrichtung
- 24: Grundkörper
- 26: Antennenanordnung
- 28: erste Antenne
- 30: erstes Antennenelement
- 32: zweites Antennenelement
- 34: drittes Antennenelement
- 36: erste Umfangsseite
- 38: zweite Umfangsseite
- 40: zweite Antenne
- 42: dritte Umfangsseite

## Patentansprüche

1. Accessoire (20) zum Anbringen an einem tragbaren Gegenstand, wobei das Accessoire (20) aufweist:
eine Funksignalübertragungsvorrichtung (22) zum Übertragen wenigstens eines Funksignals zum Bedienen eines Kraftfahrzeugs (12), insbesondere zum Öffnen, zum Schließen und/oder zum Starten,
wenigstens einen Grundkörper (24),
eine Speichereinrichtung zum Speichern des zu übertragenden Funksignals, und
eine Antennenanordnung (26) zum Übertragen und/oder Empfangen von Funksignalen,
wobei die Speichereinrichtung und die Antennenanordnung (26) in dem Grundkörper (24) integriert sind, und wobei die Antennenanordnung (26) derart ausgebildet ist, dass sie in alle Raumrichtungen ein Funksignal an das Kraftfahrzeug senden und/oder empfangen kann,
wobei das Accessoire (20) als Hülle oder Gehäuse, insbesondere eines Mobiltelefons oder einer Uhr, ausgebildet ist,
wobei die Antennenanordnung (26) eine erste Antenne (28), insbesondere für Frequenzen im Kilohertzbereich, mit wenigstens drei Antennenelementen (30, 32, 24) aufweist, wobei jedes der Antennenelemente (30, 32, 34) für eine der Raumrichtungen vorgesehen ist,
wobei alle Antennenelemente (30, 32, 34) in eine einzige Umfangsseite (30, 32, 42) der Hülle oder des Gehäuses integriert sind, oder wobei eines der Antennenelemente (30) umlaufend in die Hülle oder das Gehäuse integriert ist und die anderen Antennenelemente (32, 34) in eine der Umfangsseiten (36, 38, 42) der Hülle oder des Gehäuses integriert sind oder in zwei zueinander senkrecht stehenden Umfangsseiten (36, 38, 42) der Hülle oder des Gehäuses jeweils eine der beiden anderen Antennenelemente (32, 34) integriert ist.

2. Accessoire (20) nach Anspruch 1, **dadurch gekennzeichnet, dass** die Antennenanordnung (26) alle drei Raumrichtungen abdeckt.

3. Accessoire (20) nach Anspruch 1 oder 2, **dadurch gekennzeichnet, dass** die Antennenanordnung (26) eine zweite Antenne (40), insbesondere für Frequenzen oberhalb des Kilohertzbereichs, aufweist.

4. Accessoire (20) nach Anspruch 3, **dadurch gekennzeichnet, dass** die erste und die zweite Antenne (28, 40) in der Weise, insbesondere durch Vorsehen eines Abstands oder durch Ausrichtung der Polarisierung, angeordnet sind, dass keine Interferenz zwischen den Antennen (28, 40) entsteht.

5. Accessoire (20) nach einem der vorhergehenden Ansprüche, **dadurch gekennzeichnet, dass** die Antennenelemente (30, 32, 34) orthogonal zueinander ausgerichtet sind.

6. Accessoire (20) nach einem der vorhergehenden Ansprüche, **dadurch gekennzeichnet, dass** die Antennenelemente (30, 32, 34) eine Spulenform aufweisen.

7. Accessoire (20) nach einem der vorhergehenden Ansprüche, **dadurch gekennzeichnet, dass** jedes der Antennenelemente (30, 32, 34) einen Ferrit-Kern umfasst.

8. Accessoire (20) nach einem der vorhergehenden Ansprüche, **dadurch gekennzeichnet, dass** die Funksignalübertragungsfrequenz jedes Antennenelementes (30, 32, 34) im Niederfrequenzbereich oder Langwellenbereich, insbesondere bei 125 kHz, liegt.

9. Accessoire (20) nach einem der Ansprüche 3 bis 8, **dadurch gekennzeichnet, dass** die zweite Antenne (40) in eine Längsseite der Hülle oder des Gehäuses integriert ist.

10. Accessoire (20) nach einem der vorhergehenden Ansprüche, **dadurch gekennzeichnet, dass** in den Grundkörper (24) ferner ein Schaltkreis, eine Energiespeichereinrichtung und eine Schnittstelle zum Anschließen der Energiespeichereinrichtung an eine Stromquelle integriert ist.

11. Accessoire (20) nach einem der vorhergehenden Ansprüche, **dadurch gekennzeichnet, dass** der Grundkörper (24) einen Schalter zur Aktivierung der Übertragung und/oder des Empfangens des Funksignals aufweist.

12. Accessoire (20) nach Anspruch 3 und einem der Ansprüche 4 bis 12, **dadurch gekennzeichnet, dass** die zweite Antenne (40) ausgebildet ist, um ein RFID-Signal, ein NFC-Signal, ein WLAN-Signal, ein Bluetooth-Signal, insbesondere auf 433 MHz oder 2,4 GHz, zu empfangen und/oder zu senden.

13. Funksignalübertragungssystem (10) mit einem Accessoire (20) nach einem der vorhergehenden Ansprüche und einem Kraftfahrzeug (12).

14. Funksignalübertragungssystem (10) nach Anspruch 13, in der Weise eingerichtet, dass eine Position des Accessoires (20) durch das Kraftfahrzeug (12) geortet werden kann, insbesondere, ob das Accessoire (20) innerhalb oder außerhalb des Kraftfahrzeugs (12) angeordnet ist.

## Claims

1. An accessory (20) for fitting to a portable object, wherein the accessory (20) has:
a radio signal transmission device (22) for transmitting at least one radio signal for operating a motor vehicle (12), especially for opening, closing and/or starting,
at least one base body (24),
a storage means for storing the radio signal to be transmitted, and
an antenna arrangement(26) for transmitting and/or receiving radio signals,
wherein the storage means and the antenna arrangement(26) are integrated in the base body (24), and wherein the antenna arrangement (26) is formed such that it can send and/or receive a radio signal to the motor vehicle in all spatial directions,
wherein the accessory (20) is designed as a case or housing, especially for a mobile telephone or a clock,
wherein the antenna arrangement (26) has a first antenna (28), especially for frequencies in the kilohertz range, with at least three antenna elements (30, 32, 24), wherein each of the antenna elements (30, 32, 34) is provided for one of the spatial directions,
wherein all the antenna elements (30, 32, 34) are integrated in a single peripheral side (30, 32, 42) of the case or the housing, or wherein one of the antenna elements (30) is integrated in circumambient manner in the case or the housing and the other antenna elements (32, 34) are integrated in one of the peripheral sides (36, 38, 42) of the case or of the housing or in each case one of the other two antenna elements (32, 34) is integrated in two peripheral sides (36, 38, 42) of the case or the housing which are perpendicularto each other.

2. An accessory (20) according to Claim 1, **characterised in that** the antenna arrangement (26) covers all three spatial directions.

3. An accessory (20) according to Claim 1 or Claim 2, **characterised in that** the antenna arrangement (26) has a second antenna (40), especially for frequencies above the kilohertz range.

4. An accessory (20) according to Claim 3, **characterised in that** the first and the second antenna (28, 40) are arranged in such a manner, especially by providing a spacing or by orienting the polarisation, that no interference between the antennas (28, 40) occurs.

5. An accessory (20) according to one of the preceding claims, **characterised in that** the antenna elements (30, 32, 34) are oriented orthogonally to each other.

6. An accessory (20) according to one of the preceding claims, **characterised in that** the antenna elements (30, 32, 34) have a coil form.

7. An accessory (20) according to one of the preceding claims, **characterised in that** each of the antenna elements (30, 32, 34) comprises a ferrite core.

8. An accessory (20) according to one of the preceding claims, **characterised in that** the radio signal transmission frequency of each antenna element (30, 32, 34) lies in the low-frequency range or long-wave range, especially at 125 kHz.

9. An accessory (20) according to one of Claims 3 to 8, **characterised in that** the second antenna (40) is integrated in a long side of the case or of the housing.

10. An accessory (20) according to one of the preceding claims, **characterised in that** further a switching circuit, an energy storage means and an interface for connecting the energy storage means to a current source is integrated in the base body (24).

11. An accessory (20) according to one of the preceding claims, **characterised in that** the base body (24) has a switch for activating the transmission and/or receiving of the radio signal.

12. An accessory (20) according to Claim 3 and one of Claims 4 to 12, **characterised in that** the second antenna (40) is designed to receive and/or send an RFID signal, an NFC signal, a WLAN signal, a Bluetooth signal, especially at433 MHz or 2.4 GHz.

13. A radio signal transmission system (10) with an accessory (20) according to one of the preceding claims and a motorvehicle (12).

14. A radio signal transmission system (10) according to Claim 13, set up such that a position of the accessory (20) can be located by the motor vehicle (12), especially whether the accessory (20) is situated inside or outside the motor vehicle (12).

## Revendications

1. Accessoire (20) destiné à être installé sur un objet portatif, cet accessoire (20) comprenant :
un dispositif de transmission de signaux radio (22) permettant de transmettre au moins un signal radio permettant d'actionner un véhicule automobile (12), en particulier de l'ouvrir, de le fermer et/ou de le démarrer,
au moins un corps de base (24),
un dispositif de mémoire permettant de stocker le signal radio à transmettre, et
un dispositif d'antenne (26) permettant de transmettre et/ou de recevoir des signaux radio,
le dispositif de mémoire et le dispositif d'antenne (26) étant intégrés dans le corps de base (24) et le dispositif d'antenne (26) étant réalisé de façon à pouvoir transmettre au véhicule et/ou recevoir un signal radio dans toutes les directions spatiales,
l'accessoire (20) étant réalisé sous la forme d'une enveloppe ou d'un boîtier, en particulier d'un téléphone mobile ou d'une montre,
le dispositif d'antenne (26) comprenant une première antenne (28), en particulier pour des fréquences situées dans la plage des kilohertz, ayant au moins trois éléments d'antenne (30, 32, 24), chacun des éléments d'antenne (30, 32, 34) étant prévu pour l'une des directions spatiales,
tous les éléments d'antenne (30, 32, 34) étant intégrés dans un côté périphérique unique (30, 32, 42) de l'enveloppe ou du boîtier, ou l'un des éléments d'antenne (30) étant intégré sur le pourtour de l'enveloppe ou du boîtier et les autres éléments d'antenne (32, 34) étant intégrés dans l'un des côtés périphériques (36, 38, 42) de l'enveloppe ou du boîtier, ou, dans deux côtés périphériques perpendiculaires l'un à l'autre (36, 38, 42) de l'enveloppe ou du boîtier étant respectivement intégrés l'un des deux autres éléments d'antenne (32, 34).

2. Accessoire (20) conforme à la revendication 1,
**caractérisé en ce que**
le dispositif d'antenne (26) couvre les trois directions spatiales.

3. Accessoire (20) conforme à la revendication 1 ou 2,
**caractérisé en ce que**
le dispositif d'antenne (26) comporte une seconde antenne (40) en particulier pour des fréquences situées au-dessus de la plage des kilohertz.

4. Accessoire (20) conforme à la revendication 3,
**caractérisé en ce que**
la première antenne et la seconde antenne (28, 40) sont installées en particulier, en prévoyant un écartement ou par orientation de la polarisation de sorte qu'aucune interférence ne soit créée entre ces antennes (28, 40).

5. Accessoire (20) conforme à l'une des revendications précédentes,
**caractérisé en ce que**
les éléments d'antenne (30, 32, 34) sont orientés selon une orientation orthogonale les uns par rapport aux autres.

6. Accessoire (20) conforme à l'une des revendications précédentes,
**caractérisé en ce que**
les éléments d'antenne (30, 32, 34) ont une forme de bobine.

7. Accessoire (20) conforme à l'une des revendications précédentes,
**caractérisé en ce que**
chaque élément d'antenne (30, 32, 34) comporte un noyau en ferrite.

8. Accessoire (20) conforme à l'une des revendications précédentes,
**caractérisé en ce que**
la fréquence de transmission de signaux radio de chaque élément d'antenne (30, 32, 34) est située dans la plage des basses fréquences ou des grandes ondes, et est en particulier de 125 kHz.

9. Accessoire (20) conforme à l'une des revendications 3 à 8,
**caractérisé en ce que**
la seconde antenne (40) est intégrée dans un coté longitudinal de l'enveloppe ou du boîtier.

10. Accessoire (20) conforme à l'une des revendications précédentes,
**caractérisé en ce que**
dans le corps de base (24) sont en outre intégrés un circuit de commutation, un dispositif accumulateur d'énergie et une interface permettant de connecter le dispositif accumulateur d'énergie à une source de courant.

11. Accessoire (20) conforme à l'une des revendications précédentes,
**caractérisé en ce que**
le corps de base (24) comporte un commutateur permettant d'activer la transmission et/ou la réception du signal radio.

12. Accessoire (20) conforme à la revendication 3, et à l'une des revendications 4 à 12,
**caractérisé en ce que**
la seconde antenne (40) est réalisée pour pouvoir recevoir et/ou émettre un signal RFID, un signal NFC, un signal WLAN, un signal Bluetooth, en particulier de 433 MHz ou 2,4 GHz.

13. Système de transmission de signaux radio (10) comprenant un accessoire (20) conforme à l'une des revendications précédentes et un véhicule automobile (12).

14. Système de transmission de signaux radio (10) conforme à la revendication 13, réalisé de sorte que la position de l'accessoire (20) dans le véhicule (12) puisse être localisée, en particulier de façon à déterminer si l'accessoire (20) est installé à l'intérieur ou à l'extérieur de ce véhicule (12).
